# EUROPEAN PATENT SPECIFICATION

(11) **EP 3 612 611 B1**
(45) Date of publication and mention of the grant of the patent: **16.12.2020**
(21) Application number: 18724616.0
(22) Date of filing: 13.04.2018
(51) Int. Cl.: C09J 153/02, C09J 183/04, C09J 7/38

(54) **BLENDED BLOCK COPOLYMER/SILICONE PRESSURE SENSITIVE ADHESIVES**
GEMISCHTE BLOCKCOPOLYMER/SILIKON-HAFTKLEBSTOFFE
ADHÉSIFS SENSIBLES À LA PRESSION À BASE DE COPOLYMÈRES SÉQUENCÉS MÉLANGÉS/SILICONE

(30) Priority: 17.04.2017 US 201762486086 P
(43) Date of publication of application: 26.02.2020
(73) Proprietor: 3M Innovative Properties Company, Saint Paul, Minnesota 55133-3427 (US)
(72) Inventor: WAID, Robert D., Saint Paul, Minnesota 55133-3427 (US)
(74) Representative: Bergen, Katja
(86) International application number: PCT/IB2018/052594
(87) International publication number: WO 2018/193350

(56) References cited:
- US-A1- 2013 295 373

## Description

### Field of the Disclosure

The present disclosure relates to improved pressure sensitive adhesives (PSA) comprising blends of tackified styrenic block copolymers and nonfunctionalized silicone-based pressure sensitive adhesives (PSA). The blends are prepared by melt-processing, and pressed or extruded films thereof are crosslinked by electron beam or UV radiation. The adhesive blend films may be used alone as transfer adhesives or as the adhesive elements of single or double-sided film or foam-backed tapes.

### Background

The following references may be relevant to the general field of technology of the present disclosure: US 5,360,852; US 5,232,702; US6,197,419; US 8,173,155; US8,246,976 US 2013/295373 discloses silicone pressure-sensitive adhesives prepared by electron beam curing of nonfunctionalized silicone materials. These adhesives may additionally comprise tackifiers, e.g. MQ resins.

Certain known silicone PSA's are produced by a process known as "bodying". This process includes a condensation reaction between MQ resin and a functionalized silicone gum. Nonfunctionalized silicones are not used in this process. The condensation process is carried out in solvents with appropriate catalysts and the by-products of the condensation are removed by distillation. Since such systems rely on high molecular weight starting materials and are bodied in high boiling aromatic solvents, the resulting products typically contain catalysts and solvents. Subsequently such PSA's will typically be used in solvent coating processes. Typical coatable solutions contain less than 60% solids by weight in an aromatic solvent such as toluene or xylene. Additional solvent may be added prior to coating such that volatile organic compound (VOC) contents of greater than 50% are common when using this type of traditional silicone PSA.

### Brief Description of the Drawing

FIG. 1 is diagram of a tape according to an embodiment of the present disclosure, comprising a backing (or core) and two layers of pressure sensitive adhesive according to the present disclosure.
FIG. 2 is diagram of a bonded composite according to an embodiment of the present disclosure, comprising substrates bonded by a tape according to an embodiment of the present disclosure, the tape comprising a backing (or core) and two layers of pressure sensitive adhesive according to the present disclosure.

### Summary

Briefly, the present disclosure provides a pressure sensitive adhesive (PSA) which is a radiation-crosslinked mixture of a first component comprising a blend of a nonfunctionalized polysiloxane and a silicate-based tackifier, and a second component comprising a blend of a styrenic block copolymer and a tackifier compatible with the styrenic block copolymer. In some embodiments radiation-crosslinking is carried out by e-beam; in some embodiments by UV radiation. In some embodiments the weight ratio of nonfunctionalized polysiloxane to styrenic block copolymer in the mixture is between 0.20 and 1.15. In some embodiments the styrenic block copolymer is a styrene-isoprene-styrene block copolymer, in some a radial styrenic block copolymer, and in some a polymodal asymetric radial styrenic block copolymer. In some embodiments the nonfunctionalized polysiloxane is a polydimethylsiloxane. In some embodiments the silicate-based tackifier is an MQ resin. In some embodiments the weight ratio of silicate-based tackifier to nonfunctionalized polysiloxane in the mixture is greater than 1.57. In some embodiments the tackifier compatible with the styrenic block copolymer is a blend of hydrogenated hydrocarbon resin tackifier and terpene-based tackifier; and in some such embodiments the weight ratio of hydrogenated hydrocarbon resin tackifier to terpene-based tackifier is greater than 0.75. Additional embodiments of the PSA of the present disclosure are described below under "Selected Embodiments."

In another aspect, the present disclosure provides tapes and other constructions comprising the PSA's according to the present disclosure, in particular for use in adhering to low surface energy surfaces such as those having a surface energy below 35 dyne per centimeter as measured according to ASTM Standard D2578, where 1 dyne = 10⁻⁵ N. Additional embodiments of the tapes or constructions of the present disclosure are described below under "Selected Embodiments."

The preceding summary of the present disclosure is not intended to describe each embodiment of the present invention. The details of one or more embodiments of the invention are also set forth in the description below. Other features, objects, and advantages of the invention will be apparent from the description and from the claims.

As used herein, the term "nonfunctionalized silicone" or "nonfunctionalized polysiloxane" means silicones (polysiloxanes) terminating at end groups according to the formula: -O-SiR₃, wherein each R is independently chosen from alkyl or aryl groups that are substituted with halogens or unsubstituted, and wherein each R is typically but not necessarily selected from methyl, ethyl or phenyl. Most typically all R groups are methyl. It can be seen that the term "nonfunctionalized silicone" (polysiloxane) excludes silicones terminating at end groups according to the formula: -OR', wherein R' is hydrogen or any group bound to the oxygen of -OR' through a carbon-oxygen bond. The term "nonfunctionalized silicone" (polysiloxane) is a positive recitation of the chemical structures recited above and is not a negative limitation nor is it a product-by-process limitation.

The terms "silicone" and "polysiloxane" are used interchangeably herein.

All scientific and technical terms used herein have meanings commonly used in the art unless otherwise specified.

### Detailed Description

Briefly, in one aspect, the present disclosure provides a pressure sensitive adhesive comprising a physical blend of a non-bodied silicone pressure sensitive adhesive comprising a nonfunctionalized silicone gum and MQ resin tackifier, and at least one tackified styrenic block copolymer.

Adhesives and tapes are commonly used to bond two substrates together to form a bonded composite. While a vast array of adhesives and tapes are available, advances in substrates and end use requirements continue to drive a need for new adhesive formulations and tape constructions. In addition to performance properties, environmental regulations and processing costs also influence product formulation requirements. For example, in some applications it may be desirable to use a hot melt adhesive rather than a solvent-based adhesive.

A variety of PSA chemistries are available including, e.g., acrylic-, natural rubber-, synthetic block copolymer-, and silicone-based systems. Silicone PSA's can offer one or more of the following useful characteristics: adhesion to low surface energy surfaces, quick adhesion with short dwell times, wide use temperature (i.e., performance at high and low temperature extremes), weathering resistance (including resistance to ultraviolet radiation, oxidation, and humidity), reduced sensitivity to stress variations (e.g., mode, frequency and angle of applied stresses), and resistance to chemicals (e.g., solvents and plasticizers) and biological substances (e.g., mold and fungi).

Generally, silicone pressure sensitive adhesives are formed by mixing silicone polymer gum(s) and silicate tackifying resin(s) The polymer gums are typically high molecular weight, at least partially functionalized poly(diorganosiloxane) materials, e.g., silanol-terminated poly(dimethylsiloxane) ("PDMS") or partially functionalized poly(dimethylmethylphenylsiloxane). The tackifying resins are typically three-dimensional silicate structures ("MQ" resins), mainly end-capped with trimethylsiloxy groups. The tackifying resins also include residual silanol functionality. Functionalized silicones are covalently joined to MQ resins in a "bodying" process.

In addition, crosslinking of traditional silicone PSA's, to provide additional shear resistance is typically carried out with thermal initiators (peroxides) added to the coating solution and triggered by heat during the drying step. Other methods of crosslinking have been developed which rely on specialized catalysts (for example, salts of platinum) and functionalized (for example, vinyl groups) silicone gums and tackifiers.

A number of approaches have been investigated for the low VOC delivery of silicone PSA's. For example, water-based emulsion systems and liquid solventless systems using reactive diluents (i.e., low molecular weight molecules with reactive groups) have been explored.

The present authors recognize a need for simple and robust formulation, solventless compounding, and low VOC delivery of reduced-cost silicone PSA's. There is also a need for combining the ability of silicone adhesives to provide high adhesion to low surface energy substrates with improved shear resistance and anchoring to film and foam backing or core materials. The present authors recognize a need for pressure sensitive adhesives that bond to wide array of substrates to simplify the selection and application of tape products for the end-user.

Styrenic block copolymers, comprised of at least a polymerized glassy styrene block and a polymerized rubbery block (e.g., polyisoprene), are thermoplastic elastomers in the pure state. The thermoplastic elastomer nature arises due to microphase separation of the glassy (styrenic) block and the rubbery block into discrete but connected domains which produces a thermally reversible physical crosslink via the styrene (high Tg) blocks. Radial styrenic block copolymers are a subset of styrenic block copolymers wherein the elastomer has a multi-arm, rather than a linear structure. The presence of the radial structure results in modified phase separation and viscosity behavior versus linear styrenic block copolymers.

In order for styrenic block copolymers to be made into pressure sensitive adhesives, tackifiers must be added to convert them from elastic into viscoelastic materials through targeted modification of the properties of the rubbery and glassy blocks or phases. Since the commercial introduction of styrenic block copolymers in the 1970's, much effort has gone into the development of tackifier systems for elastomers comprised of styrene-isoprene, styrene-butadiene, and styrene ethylene butadiene blocks. Due to their chemical compositions, tackifiers may be compatible with primarily the glassy block, the rubbery block, or at least partially with both types of blocks.

We have discovered that melt-processed mixtures of silicate-tackified, nonfunctionalized silicone gums with tackified, styrenic block copolymers produce high performance PSA's with excellent adhesion to a nearly all substrates. The gross chemical incompatibility of the two discrete PSA types produces a two-phase material that generally exhibits the broad-based wetting and adhesion characteristics of the silicone portion with the stable melt-processability, melt-strength, elasticity, and cohesiveness of the block copolymer portion. Simple sequential physical blending of the constituent materials by hot melt methods eliminates the need for the complex bodying step of traditional high performance silicone PSA's, as well as the use of solvents for processing and coating. The use of nonfunctionalized PDMS gums allows for the use of lower cost silicone input materials than those of typical silicone PSA's and eliminates the condensation catalysts and environmentally harmful solvents of the complex and costly bodying operation.

The block copolymer portion of the PSA may be formulated independently of the silicone portion of the PSA to refine the properties of the final adhesive for an application. The blending of the block copolymer with the silicone PSA results in a hybrid PSA which can bond well with an underlying backing or foam based on organic constituents. This feature eliminates the need for a separate primer or tie layer in many cases, especially after the application of a crosslinking process. The use of electron beam- or UV- crosslinking after melt-processing produces an aging-stable adhesive with excellent peel and shear behavior, synergistically combining the best characteristics of the two input material classes.

In some embodiments, the compositions include a plurality of nonfunctionalized polysiloxane gums and may also include nonfunctionalized polysiloxane fluids. In some embodiments, at least one of the nonfunctionalized polysiloxanes is a poly(dialkyl siloxane); e.g., a poly(dimethyl siloxane). In some embodiments, at least a portion of the nonfunctionalized polysiloxane is an aromatic siloxane. The silicone portion of the hybrid composition is substantially free of catalysts and initiators. In some embodiments, the silicone portion of the hybrid composition comprises less than 10% by weight of a functional silicone.

The styrenic block copolymer of the hybrid composition may be a linear tri-block copolymer or a radial triblock copolymer. Some fraction of a corresponding or different diblock may also be included. The pressure sensitive adhesives according to this aspect of the present disclosure also include at least one non-silicate tackifier for the styrenic block copolymer portion of the adhesive. The non-silicate tackifier has a Tg of at least 60 degrees C, and is chosen from those classes of tackifiers known in the art to be at least partially compatible with the particular classes of block copolymer being used. In some embodiments, a second non-silicate tackifier which also has a Tg of at least 60 degrees C may also be used. Additional minor components such as antioxidants, pigments, and fillers may be used.

In some embodiments, a rubbery block comprises a polymerized conjugated diene, a hydrogenated derivative of a polymerized conjugated diene, or combinations thereof. In some embodiments, each of the rubbery blocks comprises a polymerized conjugated diene, a hydrogenated derivative of a polymerized conjugated diene, or combinations thereof. In some embodiments, a conjugated diene is selected from the group consisting of isoprene, butadiene, ethylene butadiene copolymers, and combinations thereof.

In some embodiments, a glassy block comprises polymerized monovinyl aromatic monomers. In some embodiments, the monovinyl aromatic monomer is selected from the group consisting of styrene, styrene-compatible blends, and combinations thereof. In some embodiments, at least one of the glassy polymer segments is selected from the group consisting of styrene, styrene-compatible blends, and combinations thereof, and, in some embodiments, each of the glassy polymer segments is selected from the group consisting of styrene, styrene-compatible blends, and combinations thereof.

In some embodiments, the block copolymer is a multi-arm block copolymer. In some embodiments, the multi-arm block copolymer is a star block copolymer. In some embodiments, the multi-arm block copolymer is a polymodal, asymmetric star block copolymer. In some embodiments, n (the number of arms) is a whole number from 3 to 5, inclusive, and, in some embodiments, n is 4.

In some embodiments, the Tg of the non-silicate tackifier is at least 65 degrees C. In some embodiments, the non-silicate tackifier has a softening point of at least about 125 degrees C, and, in some embodiments, at least about 140 degrees C. In some embodiments, the non-silicate tackifier is selected from the group consisting of polymeric terpenes, hetero-functional terpenes, coumarone-indene resins, C8-C10 aromatics, partially hydrogenated C8-C10 aromatics, fully hydrogenated C8-C10 aromatics, and C5/C9 aromatic modified aliphatics and fully hydrogenated hydrocarbon resins.

In some embodiments, the Tg of the optional second non-silicate tackifier is at least 65 degrees C. In some embodiments, the second non-silicate tackifier has a softening point of at least about 115 degrees C, and, in some embodiments, at least about 135 degrees C. Exemplary tackifiers include polymeric terpenes, hetero-functional terpenes, and coumarone-indene resins when used in combination with the first non-silicate tackifier.

In some embodiments, the ratio of the total weight of all block copolymers to the total weight of all non-silicate tackifiers is no greater than 1.2:1. In some embodiments, this ratio is no less than 1:1.25.

In another aspect, the present disclosure provides a tape comprising a foam backing having a first major surface and a second major surface. A first adhesive skin is bonded to the first major surface. The first adhesive skin comprises a first pressure sensitive hybrid silicone - styrenic block copolymer adhesive, as described herein.

In some embodiments, the tape comprises a second adhesive skin bonded to the second major surface. In some embodiments, the first pressure sensitive adhesive and the second adhesive are the same adhesive. In some embodiments, the second adhesive is a different type of pressure sensitive adhesive than the first adhesive skin.

In some embodiments, the foam backing comprises a thermoplastic foam. In some embodiments, the foam backing comprises a viscoelastic foam. In some embodiments, the foam backing comprises an acrylic foam.

In another aspect, the present disclosure provides methods for making a tape comprising a foam backing. In some embodiments, the method comprises extruding the foam backing and coextruding the first pressure sensitive adhesive to form the first adhesive skin bonded to the first major surface of the foam backing. In some embodiments, the method further comprises extruding the second adhesive to form a second adhesive skin bonded to the second major surface of the foam backing. In some embodiments, two or more of the foam, the first pressure sensitive adhesive and the second adhesive are co-extruded.

In some embodiments, the method comprises providing the foam backing, and applying a first adhesive composition comprising the first pressure sensitive adhesive to the first surface of the foam backing, e.g., by laminating or coating. In some embodiments, the method further comprising applying a second adhesive composition to the second surface of the foam, e.g., by laminating or coating.

In yet another aspect, the present disclosure provides a bonded composite comprising a first substrate having a first surface; a second substrate having a second surface; and a bonding interface between the first surface of the first substrate to the second surface of the second substrate. In some embodiments, the bonding interface comprises a pressure sensitive adhesive as described herein. In some embodiments, the bonding interface comprises a tape as described herein.

In another aspect, the present disclosure provides crosslinked hybrid silicone - styrenic block copolymer pressure sensitive adhesives. Such adhesives can be made according to any of the methods set forth in the present disclosure.

In yet another aspect, the present disclosure provides a tape comprising a first adhesive bonded to a first major surface of a substrate. The first adhesive can comprise any one or more of the crosslinked hybrid silicone- styrenic block copolymer pressure sensitive adhesives disclosed herein. In some embodiments, the substrate comprises a foam. In some embodiments, the substrate comprises a polymeric film. In some embodiments, the tape further comprises a second adhesive bonded to a second major surface of the substrate. In some embodiments, the second adhesive may also comprise any one or more of the crosslinked hybrid silicone- styrenic block copolymer pressure sensitive adhesives disclosed herein.

Generally, a rubbery block incorporated in a styrenic block copolymer exhibits a glass transition temperature (Tg) of less than room temperature. In some embodiments, the Tg of the rubbery block is less than about 0 °C, or even less than about -10 °C. In some embodiments, the Tg of the rubbery block is less than about -40 °C, or even less than about -60 °C.

Generally, a glassy block exhibits a Tg of greater than room temperature. In some embodiments, the Tg of the glassy block is at least about 40 °C, at least about 60 °C, at least about 80 °C, or even at least about 100 °C.

In some embodiments, the rubbery block comprises a polymerized conjugated diene, a hydrogenated derivative of a polymerized conjugated diene, or combinations thereof. In some embodiments, the conjugated dienes comprise 4 to 12 carbon atoms. Exemplary conjugated dienes include butadiene, isoprene, ethylbutadiene, phenylbutadiene, piperylene, pentadiene, hexadiene, ethylhexadiene, and dimethylbutadiene. The polymerized conjugated dienes may be used individually or as copolymers with each other. In some embodiments, the conjugated diene is selected from the group consisting of isoprene, butadiene, ethylene butadiene copolymers, and combinations thereof.

In some embodiments, at least one glassy block comprises a polymerized monovinyl aromatic monomer. In some embodiments, both glassy blocks of a triblock copolymer comprise a polymerized monovinyl aromatic monomer. In some embodiments, the monovinyl aromatic monomers comprise 8 to 18 carbon atoms. Exemplary monovinyl aromatic monomers include styrene, vinylpyridine, vinyl toluene, alpha-methyl styrene, methyl styrene, dimethylstyrene, ethylstyrene, diethyl styrene, t-butylstyrene, di-n-butylstyrene, isopropylstyrene, other alkylated-styrenes, styrene analogs, and styrene homologs. In some embodiments, the monovinyl aromatic monomer is selected from the group consisting of styrene, styrene-compatible monomers or monomer blends, and combinations thereof.

In some embodiments, the multi-arm block copolymer of the present disclosure has the general formula Qₙ-Y, wherein Q represents an arm of the multi-arm block copolymer; n represents the number of arms and is a whole number of at least 3, i.e., the multi-arm block copolymer is a star block copolymer. Y is the residue of a multifunctional coupling agent. Each arm, Q, independently has the formula G-R, wherein G is a glassy block; and R is a rubbery block. In some embodiments, n ranges from 3-10. In some embodiments, n ranges from 3-5. In some embodiments, n is 4. In some embodiments, n is equal to 6 or more.

Exemplary rubbery blocks include polymerized conjugated dienes, such as those described above, hydrogenated derivatives of a polymerized conjugated diene, or combinations thereof. In some embodiments, the rubbery block of at least one arm comprises a polymerized conjugated diene selected from the group consisting of isoprene, butadiene, ethylene butadiene copolymers, and combinations thereof. In some embodiments, the rubbery block of each arm comprises a polymerized conjugated diene selected from the group consisting of isoprene, butadiene, ethylene butadiene copolymers, and combinations thereof.

Exemplary glassy blocks include polymerized monovinyl aromatic monomers, such as those described above. In some embodiments, the glassy block of at least one arm is selected from the group consisting of styrene, styrene-compatible blends, and combinations thereof. In some embodiments, the glassy block of each arm is selected from the group consisting of styrene, styrene-compatible blends, and combinations thereof.

In some embodiments, the multi-arm radial styrenic block copolymer is a polymodal block copolymer. As used herein, the term "polymodal" means that the copolymer comprises endblocks having at least two different molecular weights. Such a block copolymer may also be characterized as having at least one "high" molecular weight endblock, and at least one "low" molecular weight endblock, wherein the terms high and low are used relative to each other. In some embodiments the ratio of the number average molecular weight of the high molecular weight endblock, (Mn)H, relative to the number average molecular weight of the low molecular weight endblock,(Mn)L, is at least about 1.25.

In some embodiments, (Mn)H ranges from about 5,000 to about 50,000. In some embodiments, (Mn)H is at least about 8,000, and in some embodiments at least about 10,000. In some embodiments, (Mn)H is no greater than about 35,000. In some embodiments, (Mn)L ranges from about 1,000 to about 10,000. In some embodiments, (Mn)L is at least about 2,000, and, in some embodiments, at least about 4,000. In some embodiments, (Mn)L is less than about 9,000, and, in some embodiments, less than about 8,000.

In some embodiments, the multi-arm block copolymer is an asymmetric block copolymer. As used herein, the term "asymmetric" means that the arms of the block copolymer are not all identical. Generally, a polymodal block copolymer is an asymmetric block copolymer (i.e., a polymodal asymmetric block copolymer) as not all arms of a polymodal block copolymer are identical since the molecular weights of the end blocks are not all the same. In some embodiments, the block copolymers of the present disclosure are polymodal, asymmetric block copolymers. Methods of making asymmetric, polymodal block copolymers are described in, e.g., U.S. Patent No. 5,296,547.

Generally, the multifunctional coupling agent joining arms of the block copolymer may be any polyalkenyl coupling agent or other material known to have functional groups that can react with carbanions of the living polymer to form linked polymers. The polyalkenyl coupling agent may be aliphatic, aromatic, or heterocyclic. Exemplary aliphatic polyalkenyl coupling agents include polyvinyl and polyalkyl acetylenes, diacetylenes, phosphates, phosphites, and dimethacrylates (e.g., ethylene dimethacrylate). Exemplary aromatic polyalkenyl coupling agents include polyvinyl benzene, polyvinyl toluene, polyvinyl xylene, polyvinyl anthracene, polyvinyl naphthalene, and divinyldurene. Exemplary polyvinyl groups include divinyl, trivinyl, and tetravinyl groups. In some embodiments, divinylbenzene (DVB) may be used, and may include o- divinyl benzene, m-divinyl benzene, p-divinyl benzene, and mixtures thereof. Exemplary heterocyclic polyalkenyl coupling agents include divinyl pyridine, and divinyl thiophene. Other exemplary multifunctional coupling agents include silicon halides, polyepoxides, polyisocyanates, polyketones, polyanhydrides, and dicarboxylic acid esters.

In some embodiments, the pressure-sensitive adhesive is prepared in a substantially solvent-free process (i.e., the adhesive contains no greater than about 1 wt. % solvent, in some embodiments, no greater than about 0.5 wt. % solvent, and in some embodiments no greater than 0.1 wt. % solvent or even no greater than trace amounts of solvent (i.e., essentially no solvent). In some embodiments, the pressure sensitive adhesive may contain residual solvents, e.g., adhesives may be prepared in solvent, and the solvent is removed prior to subsequent processing, e.g., coating. Generally, the residual solvent is present as no greater than about 1%, in some embodiments, no greater than about 0.5%, or even no greater than trace amounts of solvent (i.e., essentially no solvent). Such substantially solvent-free processes are known and include, e.g., compounding by calendaring or roll milling, and extruding (e.g., single, screw, twin screw, disk screw, reciprocating single screw, pin barrel single screw, etc.). Commercially available equipment such as BRABENDER or BANBURY internal mixers are also available to batch mix the adhesive compositions. After compounding, the adhesive may be coated through a die into a desired form, such as a layer of adhesive, or it may be collected for forming at a later time.

In another aspect, the present disclosure provides a tape comprising a backing and a pressure sensitive skin adhesive bonded to at least one major surface of the backing. In some embodiments, the tape comprises a backing and a skin adhesive bonded to both major surfaces of the backing, wherein at least one skin adhesive is a pressure sensitive adhesive. In some embodiments, both skin adhesives are pressure sensitive adhesives. In some embodiments, both adhesives are the same adhesive. In some embodiments, the adhesives are different adhesives.

As used herein, the term "core" may be used interchangeably with the term "backing" when referring to a double-sided tape construction, i.e., a tape construction having an adhesive layer on both major surfaces of the backing or core.

At least one skin adhesive of the tapes of the present disclosure is a pressure sensitive adhesive comprising a hybrid silicone-styrenic multi-arm radial block copolymer blend adhesive as described herein. In some embodiments, both skin adhesives are pressure sensitive adhesives comprising a hybrid silicone-styrenic multi-arm radial block copolymer blends as described herein.

In another embodiment, at least one skin adhesive of the tapes of the present disclosure is a pressure sensitive adhesive comprising a hybrid silicone-linear styrenic block copolymer blend adhesive as described herein. In some embodiments, both skin adhesives are pressure sensitive adhesives comprising a hybrid silicone-styrenic linear block copolymer blends as described herein.

In some embodiments, one or more of the skin adhesives may be directly bonded to a major surface of a backing or core. In some embodiments, one or more of the skin adhesives may be indirectly bonded to a major surface of a backing or core, which may include embodiments wherein a primer layer is interposed between the skin adhesive and the major surface, or embodiments wherein a barrier layer is interposed between the skin adhesive and the major surface.

Any known backing or core may be used. In some embodiments, a backing or core comprising a foam may be used, e.g., open cell foams or closed cell foams. In some embodiments, the foam may comprise a thermoplastic foam. In some embodiments, the foam may comprise a thermoset foam. Exemplary foams include acrylic foams, polyethylene foams, and polyurethane foams. Exemplary foams are also described in, e.g., the Handbook of Polymer Foams, David Eaves, editor, published by Shawbury, Shrewsbury, Shropshire, UK : Rapra Technology, 2004.

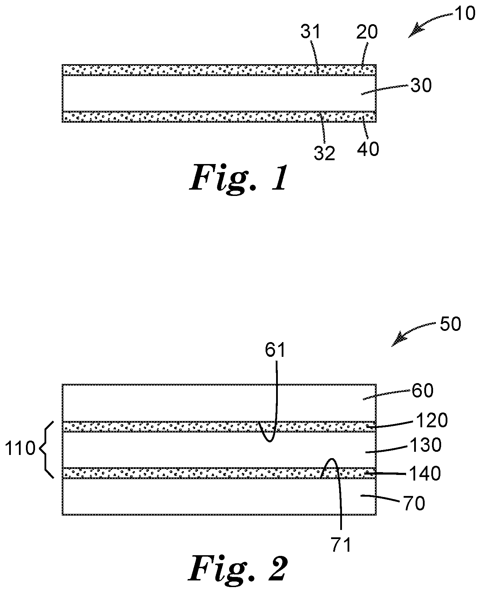

Referring to FIG. 1, exemplary tape 10, according to some embodiments of the present disclosure, comprises backing (or core) 30 and two adhesive layers. First adhesive layer 20 is bonded to first major surface 31 of backing 30, while second adhesive layer 40 is bonded to second major surface 32 of backing 30. As shown in FIG. 1, both first adhesive layer 20 and second adhesive layer 40 are directly bonded a major surface of backing 30. In some embodiments, one or both adhesive layer may be indirectly bonded to backing 30. For example, in some embodiments, one or more additional layers (e.g., primers, adhesion promoting layers, films, webs, scrims, and the like) may be interposed between the backing and an adhesive layer.

In another aspect, the present disclosure provides a bonded composite. As used herein, a bonded composite comprises a first substrate having a first major surface and a second substrate having a first major surface, wherein the first major surface of the first substrate is bonded to the first major surface of the second substrate via a bonding interface. The bonding interface comprises an adhesive layer comprising a hybrid silicone- styrenic multi-arm radial block copolymer blend adhesive as described herein.

In some embodiments, the bonding interface comprises a backing having a first skin adhesive bonded to the first major surface of the backing and a second skin adhesive bonded to the second major surface of the backing. At least one of the skin adhesives comprises pressure sensitive adhesive comprising a hybrid silicone-styrenic block copolymer blend adhesive as described herein. In some embodiments, both the first skin adhesive and the second skin adhesive comprises a pressure sensitive adhesive comprising a hybrid silicone-styrenic block copolymer blend adhesive as described herein.

In some embodiments, the first substrate comprises a metal, glass, ceramic, or polymeric material, and combinations thereof. In some embodiments, the first substrate includes a painted or polymeric surface. In some embodiments, the painted surface may comprise an automotive paint or clearcoat, or a painted molded plastic part.

In some embodiments, the first major surface of the first major substrate is a low surface energy surface. As used herein, a low surface energy surface means a surface with a measured surface energy below approximately 35 dyne per centimeter. The surface energy of a surface may be tested according to ASTM Standard D2578. Suitable test kits include, e.g., the ACCU-DYNE surface wettability kit, available from Diversified Enterprises, Claremont, New Hampshire.

In some embodiments, the second substrate comprises a metal, glass, ceramic, or polymeric material, and combinations thereof. In some embodiments, the second substrate includes a primed, painted, or polymeric surface. In some embodiments, the painted surface may comprise an automotive paint or clearcoat or painted or hardcoated molded plastic part. In some embodiments, the first major surface of the second substrate is a low surface energy surface.

In some embodiments, the backing of the bonding interface comprises a foam, e.g., an open cell foam or a closed cell foam. In some embodiments, the foam comprises a thermoplastic foam. In some embodiments, the foam comprises a thermoset foam. In some embodiments, the foam comprises an acrylic foam. In some embodiments, the foam is a flexible foam. Generally, a flexible foam is a foam which, when in sheet form, can be bent back upon itself without fracturing. Exemplary foams are described in, e.g., the Handbook of Polymer Foams, David Eaves, editor, published by Shawbury, Shrewsbury, Shropshire, UK : Rapra Technology, 2004.

Referring to **FIG. 2****,** exemplary bonded composite **50,** according to some embodiments of the present disclosure, comprises first substrate **60** bonded to second substrate **70** via bonding interface **110.** Bonding interface **110** comprises a tape comprising backing (or core) **130** and two adhesive layers. First adhesive layer **120** is bonded to a first major surface of backing **130,** while second adhesive layer **140** is bonded to a second major surface of backing **130.** As shown in **FIG. 2****,** both first adhesive layer **120** and second adhesive layer **140** are directly bonded a major surface of backing **130.** In some embodiments, one or both adhesive layer may be indirectly bonded to backing **130.**

As shown in **FIG. 2****,** in some embodiments, first adhesive layer **120** is bonded directly to major surface **61** of first substrate **60.** Similarly, in some embodiments, second adhesive layer **140** is directly bonded to major surface **71** of second substrate **70.** In some embodiments, one or both adhesive layers may be indirectly bonded to a major surface of a substrate. For example, in some embodiments, one or more additional layers (e.g., primers, adhesion promoting layers, films, webs, scrims, and the like) may be interposed between an adhesive layer and a substrate.

In another aspect, the present disclosure provides methods of making a tape comprising a backing or a core, wherein the backing or the core comprises a foam, such as those described above. The tape comprises at least one skin adhesive, wherein at least one skin adhesive is a pressure sensitive adhesive comprising a hybrid silicone- styrenic block copolymer blend adhesive as described herein.

In some embodiments, the method comprises extruding a foam backing. In some embodiments, the method further comprises extruding at least one skin adhesive which is the PSA of the present disclosure. In some embodiments, the foam and at least one skin adhesive are co-extruded. Methods of extruding polymeric foams and methods of coextruding polymer foams and skin adhesives are described, e.g., in U.S. Patent No. 6,103,152 (Gehlsen et al.) and U.S. Patent No. 6,630,531 (Khandpur et al.), both of which are assigned to the present assignee, and are herein incorporated by reference in their entireties.

In some embodiments, the method of making tapes having a foam backing comprises extruding a foam backing and coextruding a first pressure sensitive adhesive as described herein to form a first adhesive skin bonded to the first major surface of the foam backing. In some embodiments, the method further comprises extruding a second adhesive to form a second adhesive skin bonded to the second major surface of the foam backing.

In some embodiments, the method of making tapes having a foam backing comprises providing the foam backing, which may have been produced by extrusion or any other known means, and applying a first adhesive composition comprising a first pressure sensitive adhesive as described herein to the first surface of the foam backing. The first adhesive composition may be applied by, e.g., laminating or coating (e.g., knife coating, roll coating, gravure coating, rod coating, curtain coating, spray coating, or air knife coating).

In some embodiments, the second adhesive may be independently extruded or co-extruded with the foam and/or the first adhesive. In some embodiments, the second adhesive may be applied to the foam backing by, e.g., laminating or coating.

In some embodiments, the first and/or second adhesive may be cured. In some embodiments, one or both adhesives may crosslinked via exposure to actinic radiation, e.g., electron beam radiation or ultraviolet radiation. In some embodiments, second adhesives other than those pressure sensitive adhesives comprising a hybrid silicone- styrenic multi-arm radial block copolymer blend adhesive may be crosslinked by thermal means.

Objects and advantages of this disclosure are further illustrated by the following examples, but the particular materials and amounts thereof recited in these examples, as well as other conditions and details, should not be construed to unduly limit this disclosure.

### Examples

Unless otherwise noted, all reagents were obtained or are available from Aldrich Chemical Co., Milwaukee, WI, or may be synthesized by known methods. Unless stated otherwise, all percentages are parts by weight.

**Table 1: Summary of materials**

| | | |
|---|---|---|
| EL Polymer NA | A high molecular weight, high viscosity nonfunctionalized PDMS gum | Wacker Chemie AG |
| MQ-803 | Silicate-based tackifier sold as MQ-RESIN POWDER 803 TF, a co-hydrolysis product of tetraalkoxy silane (Q unit) and trimethyl-ethoxy silane (M unit) | Wacker Chemie AG |
| KRATON D1340KT | A dissimilar arm, styrene-isoprene, star polymer with 9.2% styrene content and made according to U.S. Pat. No. 5,393,787 | Kraton Polymers, Inc. (Houston, Texas) |
| KRATON D1116K | A clear, radial triblock copolymer based on styrene and butadiene, with a polystyrene content of 23%. | Kraton Polymers, Inc. (Houston, Texas) |
| KRATON D1161P | A clear, linear triblock copolymer based on styrene and isoprene, with a polystyrene content of 15%. | Kraton Polymers, Inc. (Houston, Texas) |
| DYNE 52 | A 70/30 radial structure ethylene-butylene/styrene thermoplastic copolymer, with a medium-high molecular weight, sold as CALPRENE | Dynasol Elastomers (Houston, TX) |
| ESCOREZ 5615 | Hydrogenated hydrocarbon resin tackifier. | ExxonMobil (Baton Rouge, LA) |
| REGALITE R1125 | Hydrogenated hydrocarbon resin tackifier. | Eastman Chemical Resins, Inc. (Kingsport, TX) |
| ARKON P125 | Hydrogenated hydrocarbon resin tackifier. | Arakawa Chemical Industries, Limited |
| ARKON P140 | Hydrogenated hydrocarbon resin tackifier. | Arakawa Chemical Industries, Limited |
| PICCOLYTE A135 polyterpene resin | Terpene-based tackifier; a polymer of alpha pinene. | Hercules Inc. (Wilmington, DE) |
| IRGANOX 1010FF | Antioxidant. Pentaerythritol tetrakis (3-(3,5-di-tert-butyl-4-hydroxyphenyl)proprionate | BASF |
| SYLOID AL 1 | Micronized silica gel | Grace Davison division of W.R. Grace & Co. |

Compositions for Hybrid Silicone - Styrenic Block Copolymer Adhesives (HSSBC) Adh-1 to Adh-30 and comparative adhesives C.Ex. 1 to C.Ex. 3 are disclosed in Table 2. Blank cells in Table 2 are zeros. The batch preparation of Hybrid Silicone - styrenic Block Copolymer Adhesives (HSSBC) Adh-1 to Adh-30 and comparative adhesives C.Ex. 1 to C.Ex. 3 was carried out using a Brabender Plasti-corder unit equipped with an electrically heated three part mixer with a capacity of approximately 55cm³ and high shear counter-rotating blades. The mixer was preheated to 180°C and set at a mixing speed of 90 rpm and the silicone components (gum and powdered silicate tackifier) were added separately. The mixing operation was continued until the mixture had reached a constant viscosity as measured by the motor torque readout of the mixer and the mixture itself appeared homogeneous and transparent. The solid granular hydrocarbon-based components were pre-combined in the dry state and added to the hot silicone mixture in the Brabender. Following the addition and softening of the organic components the mixer speed was increased to approximately 150 rpm and mixing continued until a smooth, opaque white to off-white melt processable mass was obtained. After removal from the mixer, the bulk material was pressed into thin films between PET release liners using a shimmed hydraulic press set at approximately 105°C. At least one of the pressing liners had a fluorosilicone-based release treatment applied to ease removal of the hot-pressed adhesive film from the liner. The resulting films were approximately 0.1mm thick.

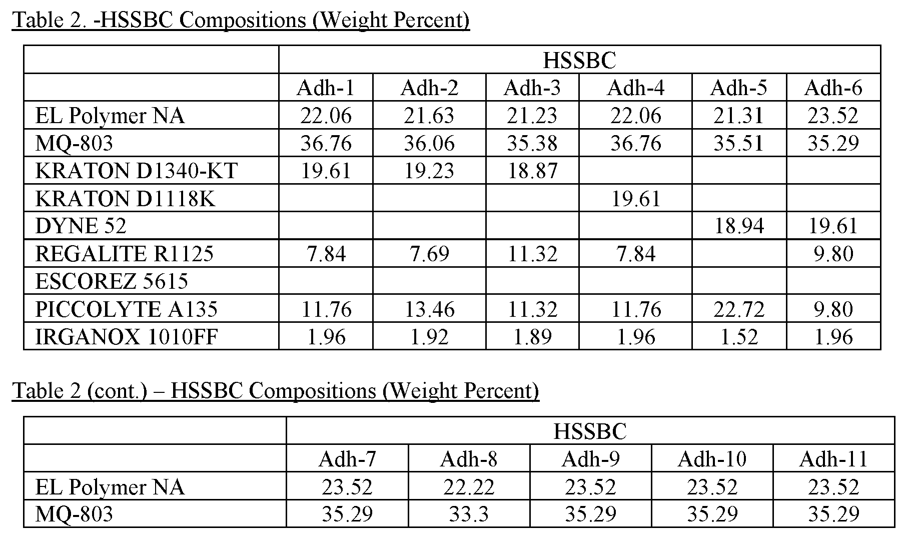

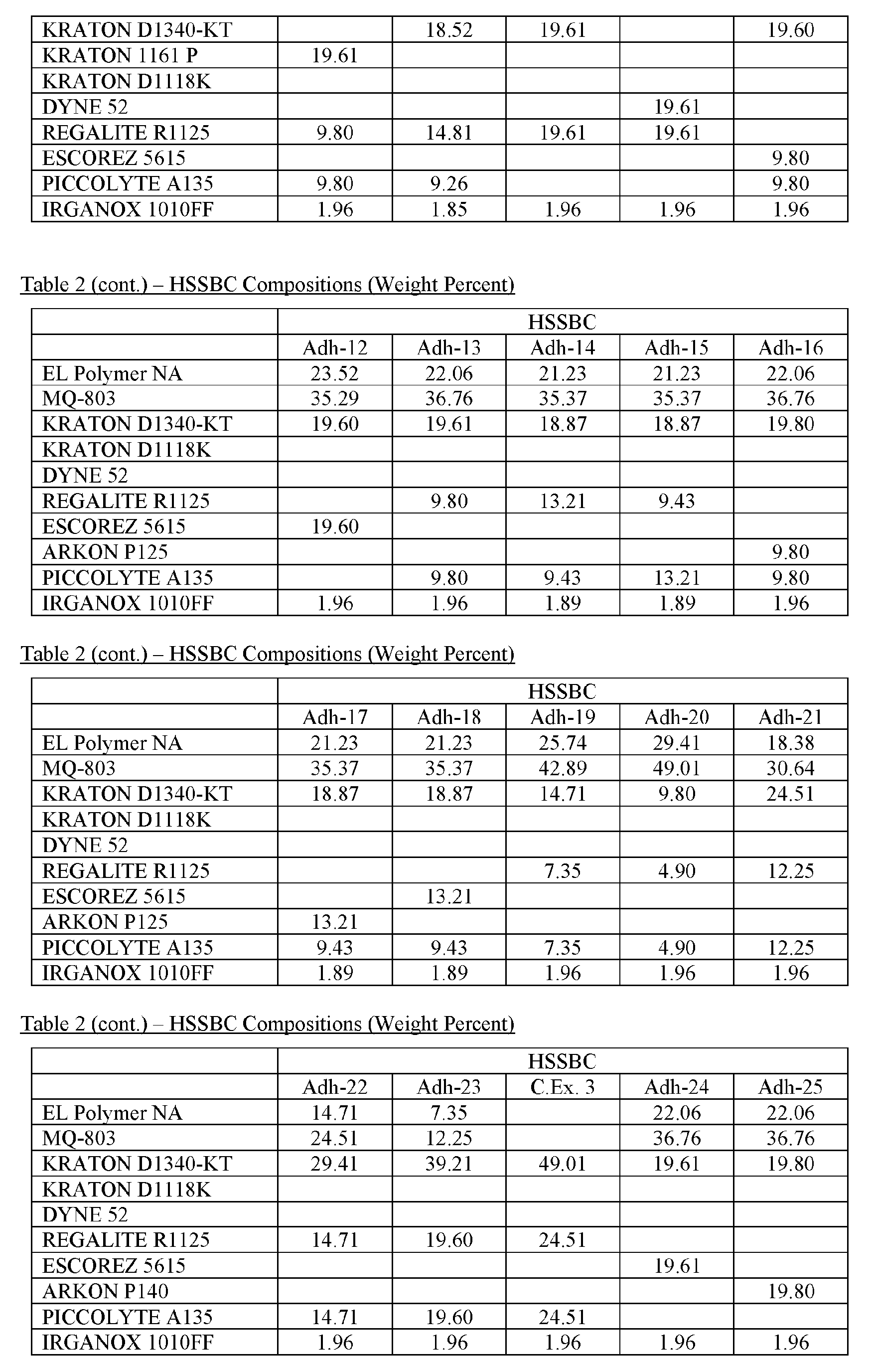

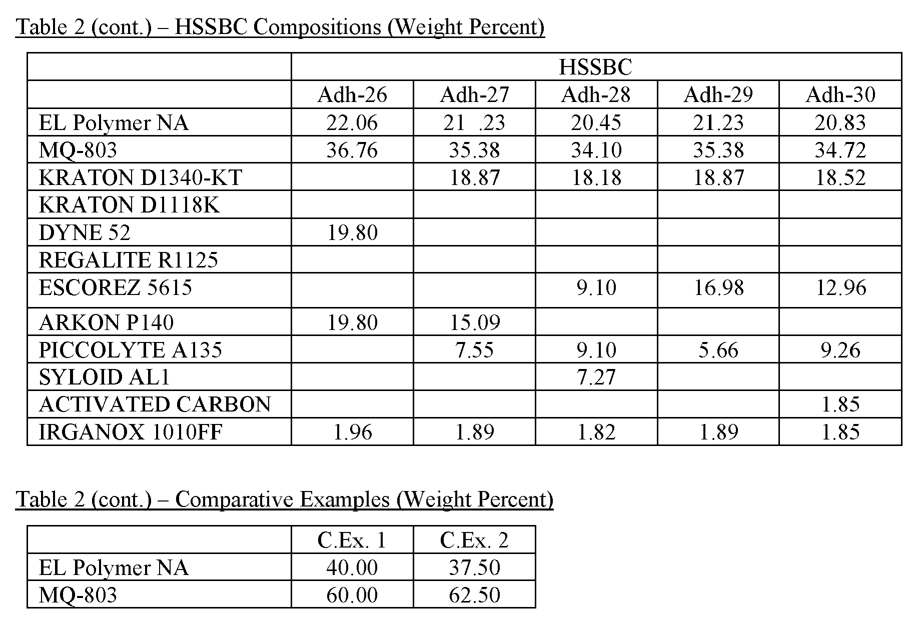

For testing of adhesive properties, the HSSBC adhesives were laminated to the non-linered side of a double-sided commercial foam tape, PT1100, available from 3M, St. Paul MN. As received, this tape has a single red film liner which preferentially remains with one face of the tape when the roll is unwound. For testing purposes, the pressed HSSBC film adhesive adhered to the carrier liners was exposed by removing one carrier liner and then manually laminated to the adhesive face of the foam tape exposed by unrolling the tape. The carrier liner was then removed from the newly laminated adhesive, which was then re-covered by a fresh piece of fluorosilicone-release modified PET liner. The new foam tape construction was ironed through the fluorosilicone treated PET liner with a laundry iron on the permanent press setting until the tape softened slightly and was warm to the touch on the linered side opposite from the ironed surface (hereinafter the "second surface"). After the heat exposure and the return of the tape to room temperature, the side of the foam tape face bearing the HSSBC skin adhesive (hereinafter the "first surface") was exposed to electron beam radiation with a dose-depth profile calculated to crosslink the added skin adhesive and to fix the laminated skin to the underlying PT1100 carrier. The acceleration voltage was chosen so as not to penetrate beyond the midpoint of the foam tape so as not to modify the second surface adhesive. The acceleration voltage of the electron beam in all cases was 240 keV and dose levels of 6 and 12 Mrad were employed to produce two sets of samples with different crosslink levels for each adhesive formulation.

Comparative Examples (C.Ex.1 and 2) consisted of two different blends of nonfunctionalized PDMS gum blended with MQ resin under the same mixing conditions as the HSSBC examples, omitting the styrenic block copolymer and its tackifiers. A third Comparative Example (C.Ex. 3) includes the styrenic block copolymer and its tackifiers and omits the silicone and silicone tackifier. A fourth Comparative Example (C.Ex. 4) consisted of a commercially available double-sided acrylic foam tape, PT1100, from 3M LLC. St. Paul, MN. The linered side of PT1100 was bonded to the substrates of interest for comparative testing purposes.

The laminated and crosslinked experimental samples (Adh. 1-31) and the Comparative Examples 1-3 were tested in 90 degree peel and static shear by applying the adhesive of interest to the surface of the target substrate(s).

The adhesive tapes were tested for 90 Degree Peel Adhesion. A test sample was prepared by adhering a 12.5 mm wide x 115 mm long strip of the tape with the as-received linered second surface against a 19 mm by 115 mm wide strip of anodized aluminum foil, and the first adhesive surface against the target substrate of interest. The sole exception is Comparative Example 3 where the PT1100 tape applied in the opposite orientation (i.e, linered side to target substrate). The laminated test assembly was rolled down using a 6.6 kg steel roller and left at room temperature 24 hours before testing. The test was run on an Instron Model 5565 tensile tester by pulling the aluminum foil and tape away from the test panel at a constant 90 degree angle at a rate of 300 mm/min. Tests were run in duplicate and results are reported in Newtons/cm (N/cm).

Static shear testing was carried out in a constant temperature forced air oven equipped with switches wired to automatically record the time-to-failure of specimens. Specimens consisted of 12.5 x 25 mm tape foam rectangles with the first surface bonded to the target substrate and the second surface bonded to a 19 mm by 115 mm wide strip of anodized aluminum foil which was then folded and stapled at its unbonded end to allow the hanging of a calibrated weight, placing the tape specimen under a steady static shear load of 250g. Specimens surviving a minimum of 10000 minutes were considered to pass this test.

The results of testing of the exemplified HSSBC adhesives and the Comparatives are summarized in Table 3. The adhesives were tested against two common automotive substrates. The first substrate, thermoplastic olefin polymer (TPO), is a polypropylene-based material combined with impact modifier(s) and filler, widely used in for interior and exterior applications. TPO displays the low surface energy values typical of olefinic polymers and is considered by those skilled in the art to be a difficult substrate for tape adhesion. Common industrial practice for the successful PSA bonding of TPO includes surface treatment of the plastic parts including priming with solvent-based primers, or application of corona, flame, or plasma treatment to increase the surface energy. The TPO substrates of these examples were tested as received from the vendor without additional surface treatment under than a light wipe with a lint-free tissue to remove surface dust. The specific TPO used for testing was TRC 779X, available from LyondellBasell, Houston, TX. The polymer was molded into test plaques of dimensions 100 x 305 x 3 mm by a third-party supplier.

The second substrate was an automotive clearcoat paint manufactured by PPG Industries Automotive OEM Coatings, Cleveland, OH, under the designation SRC8002. Steel panels of dimensions 100 x 305 x 0.8 mm painted according to automotive OEM requirements with the SRC 8002 clearcoat as the final topcoat layer were obtained from ACT Test Panel Technologies, Hillsdale, MI. Panels were prepared by a wiping with a 1:1 water-isopropanol solution immediately before bonding.

**Table 3. Peel and Static Shear Results**

| | RT 90 Degree Peel, 24Hr RT Dwell, N/cm, Avg. of 2 Replicates | | | | 70 C Static Shear 250g, Replicates Surviving 10 000 Minutes | | | |
|---|---|---|---|---|---|---|---|---|
| Substrate | TPO 779X | | SRC 8002 | | TPO 779X | | SRC 8002 | |
| E-Beam | 240/6 | 240/12 | 240/6 | 240/12 | 240/6 | 240/12 | 240/6 | 240/12 |
| Adh 1 | 33.81 | 38.59 | 27.48 | NT* | 0/3 | 0/3 | 2/3 | 0/3 |
| Adh 2 | 48.53 | 51.12 | 25.34 | 39.10 | 0/3 | 0/3 | 2/3 | 3/3 |
| Adh 3 | 32.06 | 37.77 | 36.93 | 43.07 | 0/3 | 0/3 | 3/3 | 3/3 |
| Adh 4 | 43.38 | 32.20 | 30.73 | 46.66 | 0/3 | 0/3 | 1/3 | 2/3 |
| Adh 5 | 24.38 | 11.60 | 22.16 | 19.78 | 3/3 | 3/3 | 2/3 | 2/3 |
| Adh 6 | 12.88 | 19.62 | 17.78 | 14.39 | 3/3 | 3/3 | 3/3 | 3/3 |
| Adh 7 | 23.31 | 24.05 | 17.12 | 27.65 | 0/3 | 2/3 | 0/3 | 2/3 |
| Adh 8 | 21.14 | 24.76 | 23.56 | 21.68 | 0/3 | 0/3 | 1/3 | 3/3 |
| Adh 9 | 19.79 | 16.71 | 23.03 | 37.99 | 0/3 | 0/3 | 0/3 | 0/3 |
| Adh 10 | 13.44 | 26.20 | 16.94 | 14.19 | 2/3 | 2/3 | 2/3 | 3/3 |
| Adh 11 | 20.46 | 18.04 | 27.93 | 45.47 | 0/3 | 0/3 | 1/3 | 0/3 |
| Adh 12 | 14.33 | 30.96 | 21.53 | 31.01 | 0/3 | 0/3 | 0/3 | 3/3 |
| Adh 13 | 27.07 | 27.53 | 44.14 | 47.74 | 2/3 | 3/3 | 3/3 | 3/3 |
| Adh 14 | 29.94 | 30.94 | 32.59 | 41.35 | 3/3 | 3/3 | 3/3 | 3/3 |
| Adh 15 | 12.04 | 25.81 | 12.88 | 22.00 | 0/3 | 2/3 | 3/3 | 3/3 |
| Adh 16 | 29.98 | 30.77 | 25.38 | 40.88 | 3/3 | 3/3 | 3/3 | 3/3 |
| Adh 17 | 34.25 | 24.50 | 0.00 | 52.29 | 2/3 | 3/3 | 3/3 | 3/3 |
| Adh 18 | 38.17 | 38.29 | 0.00 | 45.47 | 3/3 | 3/3 | 3/3 | 3/3 |
| Adh 19 | 39.18 | 53.66 | 42.61 | 51.64 | 0/3 | 0/3 | 0/3 | 0/3 |
| Adh 20 | 43.87 | 42.46 | 56.84 | 44.49 | 0/3 | 1/3 | 0/3 | 0/3 |
| Adh 21 | 28.32 | 26.43 | 25.20 | 29.07 | 0/3 | 2/3 | 2/3 | 3/3 |
| Adh 22 | 30.91 | 16.77 | 31.31 | 29.80 | 3/3 | 3/3 | 3/3 | 3/3 |
| Adh 23 | 9.17 | 33.92 | 6.07 | 15.42 | 1/3 | 3/3 | 0/3 | 2/3 |
| Adh 24 | 47.3 | 50.37 | 34.09 | 39.13 | 0/3 | 0/3 | 0/3 | 3/3 |
| Adh 25 | 38.50 | 16.00 | 45.66 | 46.87 | 0/3 | 3/3 | 0/3 | 3/3 |
| Adh 26 | 18.53 | 30.66 | 19.29 | 13.11 | 3/3 | 3/3 | 3/3 | 3/3 |
| Adh 27 | 49.35 | 33.11 | 43.73 | 32.29 | 0/3 | 3/3 | 0/3 | 3/3 |
| Adh 28 | 31.73 | 44.49 | 35.69 | 33.34 | 2/3 | 3/3 | 2/3 | 3/3 |
| Adh 29 | 42.16 | 49.28 | 34.88 | 37.94 | 0/3 | 1/3 | 0/3 | 1/3 |
| Adh 30 | 40.46 | 49.28 | 47.88 | 52.85 | 0/3 | 0/3 | 0/3 | 0/3 |
| C.Ex. 1 | 20.93 | 19.78 | 48.30 | 47.95 | 0/3 | 0/3 | 0/3 | 1/3 |
| C.Ex. 2 | 26.6 | 26.04 | 51.8 | 52.29 | 0/3 | 0/3 | 0/3 | 0/3 |
| C.Ex. 3 | 46.36 | 48.91 | 46.29 | 47.92 | 0/3 | 0/3 | 0/3 | 0/3 |
| C.Ex. 4 | 8.96 | | 14.32 | | 0/3 | | 3/3 | |

| | | | | | | | | |
|---|---|---|---|---|---|---|---|---|
| *Not Tested | | | | | | | | |

Various modifications and alterations of this disclosure will become apparent to those skilled in the art without departing from the scope and principles of this disclosure, and it should be understood that this disclosure is not to be unduly limited to the illustrative embodiments set forth hereinabove.

## Claims

1. A pressure sensitive adhesive which is a radiation-crosslinked mixture of:
A. a first component comprising a blend of:
i) a nonfunctionalized polysiloxane, and
ii) a silicate-based tackifier; and
B. a second component comprising a blend of:
i) a styrenic block copolymer, and
ii) a tackifier compatible with the styrenic block copolymer.

2. The pressure sensitive adhesive of claim 1 wherein the mixture is e-beam crosslinked at a dose level of 6 Mrad or greater.

3. The pressure sensitive adhesive of claim 1 or 2 wherein the styrenic block copolymer is a radial styrenic block copolymer.

4. The pressure sensitive adhesive of claim 1 or 2 wherein the styrenic block copolymer is a polymodal asymetric radial styrenic block copolymer.

5. The pressure sensitive adhesive of any of the preceding claims wherein the styrenic block copolymer is a styrene-isoprene-styrene block copolymer.

6. The pressure sensitive adhesive of any of the preceding claims, wherein the nonfunctionalized polysiloxane is a polydimethylsiloxane.

7. The pressure sensitive adhesive of any of the preceding claims, wherein the mixture comprises 10 wt% to 23 wt% of the nonfunctionalized polysiloxane.

8. The pressure sensitive adhesive of any of the preceding claims, wherein the silicate-based tackifier is an MQ resin.

9. The pressure sensitive adhesive of any of the preceding claims, wherein the weight ratio of silicate-based tackifier to nonfunctionalized polysiloxane in the mixture is greater than 1.57.

10. The pressure sensitive adhesive of any of the preceding claims, wherein the tackifier compatible with the styrenic block copolymer is a blend of a hydrogenated hydrocarbon resin tackifier and a terpene-based tackifier.

11. The pressure sensitive adhesive of claim 10, wherein the weight ratio of hydrogenated hydrocarbon resin tackifier to terpene-based tackifier is greater than 0.75.

12. The pressure sensitive adhesive of any of the preceding claims, wherein the weight ratio of nonfunctionalized polysiloxane to styrenic block copolymer in the mixture is between 0.20 and 1.15.

13. An adhesive article comprising an outermost layer comprising the pressure sensitive adhesive according to any of claims 1-12, wherein the outermost layer is borne on a backing layer.

14. A construction comprising the pressure sensitive adhesive according to any of claims 1-12 bound to a surface of a substrate, wherein the surface is a low surface energy surface having a surface energy below 35 dyne per centimeter as measured according to ASTM Standard D2578, where 1 dyne = 10⁻⁵ N.

## Patentansprüche

1. Ein Haftklebstoff, der ein mittels Strahlung vernetztes Gemisch ist aus:
A. einem ersten Bestandteil, umfassend eine Mischung aus:
i) einem nicht funktionalisierten Polysiloxan und
ii) einem Klebrigmacher auf Silikatbasis; und
B. einem zweiten Bestandteil, umfassend eine Mischung aus:
i) einem Styrolblockcopolymer und
ii) einem Klebrigmacher, der mit dem Styrolblockcopolymer kompatibel ist.

2. Der Haftklebstoff nach Anspruch 1, wobei das Gemisch bei einer Dosishöhe von 6 Mrad oder mehr mittels e-Strahl vernetzt ist.

3. Der Haftklebstoff nach Anspruch 1 oder 2, wobei das Styrolblockcopolymer ein radiales Styrolblockcopolymer ist.

4. Der Haftklebstoff nach Anspruch 1 oder 2, wobei das Styrolblockcopolymer ein polymodales asymmetrisches radiales Styrolblockcopolymer ist.

5. Der Haftklebstoff nach einem der vorstehenden Ansprüche, wobei das Styrolblockcopolymer ein Styrol-Isopren-Styrol-Blockcopolymer ist.

6. Der Haftklebstoff nach einem der vorstehenden Ansprüche, wobei das nicht funktionalisierte Polysiloxan ein Polydimethylsiloxan ist.

7. Der Haftklebstoff nach einem der vorstehenden Ansprüche, wobei das Gemisch zu 10 Gew.-% bis 23 Gew.-% das nicht funktionalisierte Polysiloxan umfasst.

8. Der Haftklebstoff nach einem der vorstehenden Ansprüche, wobei der Klebrigmacher auf Silikatbasis ein MQ-Harz ist.

9. Der Haftklebstoff nach einem der vorstehenden Ansprüche, wobei das Gewichtsverhältnis von Klebrigmacher auf Silikatbasis zu nicht funktionalisiertem Polysiloxan in dem Gemisch größer als 1,57 ist.

10. Der Haftklebstoff nach einem der vorstehenden Ansprüche, wobei der mit dem Styrolblockcopolymer kompatible Klebrigmacher eine Mischung aus einem hydrierten Kohlenwasserstoffharz-Klebrigmacher und einem Klebrigmacher auf Terpenbasis ist.

11. Der Haftklebstoff nach Anspruch 10, wobei das Gewichtsverhältnis von hydriertem Kohlenwasserstoffharz-Klebrigmacher zu Klebrigmacher auf Terpenbasis größer als 0,75 ist.

12. Der Haftklebstoff nach einem der vorstehenden Ansprüche, wobei das Gewichtsverhältnis von nicht funktionalisiertem Polysiloxan zu Styrolblockcopolymer in dem Gemisch zwischen 0,20 und 1,15 liegt.

13. Ein Klebstoffartikel, umfassend eine äußerste Schicht, die den Haftklebstoff nach einem der Ansprüche 1 bis 12 umfasst, wobei die äußerste Schicht auf einer Trägerschicht aufgebracht ist.

14. Eine Konstruktion, umfassend den Haftklebstoff nach einem der Ansprüche 1 bis 12, der an eine Oberfläche eines Substrats gebunden ist, wobei die Oberfläche eine Oberfläche mit geringer Oberflächenenergie ist, die eine Oberflächenenergie unter 35 Dyn pro Zentimeter aufweist, gemessen nach der Norm ASTM D2578, wobei 1 Dyn = 10⁻⁵ N ist.

## Revendications

1. Adhésif sensible à la pression qui est un mélange réticulé par rayonnement de :
A. un premier composant comprenant une combinaison de :
i) un polysiloxane non fonctionnalisé, et
ii) un agent collant à base de silicate ; et
B. un deuxième composant comprenant une combinaison de :
i) un copolymère séquencé styrénique, et
ii) un agent collant compatible avec le copolymère séquencé styrénique.

2. Adhésif sensible à la pression selon la revendication 1 dans lequel le mélange est réticulé par faisceau d'électrons à un niveau de dose de 6 Mrad ou plus.

3. Adhésif sensible à la pression selon la revendication 1 ou 2 dans lequel le copolymère séquencé styrénique est un copolymère séquencé styrénique radial.

4. Adhésif sensible à la pression selon la revendication 1 ou 2 dans lequel le copolymère séquencé styrénique est un copolymère séquencé styrénique radial asymétrique polymodal.

5. Adhésif sensible à la pression selon l'une quelconque des revendications précédentes dans lequel le copolymère séquencé styrénique est un copolymère séquencé styrène-isoprène-styrène.

6. Adhésif sensible à la pression selon l'une quelconque des revendications précédentes, dans lequel le polysiloxane non fonctionnalisé est un polydiméthylsiloxane.

7. Adhésif sensible à la pression selon l'une quelconque des revendications précédentes, dans lequel le mélange comprend 10 % en poids à 23 % en poids du polysiloxane non fonctionnalisé.

8. Adhésif sensible à la pression selon l'une quelconque des revendications précédentes, dans lequel l'agent collant à base de silicate est une résine MQ.

9. Adhésif sensible à la pression selon l'une quelconque des revendications précédentes, dans lequel le rapport pondéral de l'agent collant à base de silicate au polysiloxane non fonctionnalisé dans le mélange est supérieur à 1,57.

10. Adhésif sensible à la pression selon l'une quelconque des revendications précédentes, dans lequel l'agent collant compatible avec le copolymère séquencé styrénique est une combinaison d'un agent collant résine d'hydrocarbure hydrogéné et d'un agent collant à base de terpène.

11. Adhésif sensible à la pression selon la revendication 10, dans lequel le rapport pondéral de l'agent collant résine d'hydrocarbure hydrogéné à l'agent collant à base de terpène est supérieur à 0,75.

12. Adhésif sensible à la pression selon l'une quelconque des revendications précédentes, dans lequel le rapport pondéral du polysiloxane non fonctionnalisé au copolymère séquencé styrénique dans le mélange est compris entre 0,20 et 1,15.

13. Article adhésif comprenant une couche externe comprenant l'adhésif sensible à la pression selon l'une quelconque des revendications 1 à 12, dans lequel la couche externe est portée par une couche de support.

14. Construction comprenant l'adhésif sensible à la pression selon l'une quelconque des revendications 1 à 12 lié à une surface d'un substrat, dans lequel la surface est une surface à faible énergie de surface ayant une énergie de surface inférieure à 35 dynes par centimètre telle que mesurée selon la norme ASTM D2578, où 1 dyne = 10⁻⁵ N.
